# EUROPEAN PATENT APPLICATION

(11) **EP 4 807 838 A1**
(43) Date of publication of application: **16.09.2026**
(21) Application number: 24887646.8
(22) Date of filing: 19.09.2024
(51) Int. Cl.: H01M 10/0525, H01M 10/0583, H01M 50/463

(54) **BATTERY CELL AND ELECTRIC DEVICE**

(30) Priority: 09.11.2023 CN 202311490411
(71) Applicant: Ningde Amperex Technology Limited, Ningde, Fujian 352100 (CN)
(72) Inventor: CHEN, Minjing, Ningde, Fujian 352100 (CN)
(74) Representative: Kraus & Lederer PartGmbB
(86) International application number: PCT/CN2024/119837
(87) International publication number: WO 2025/098028

(57) **Abstract**

A battery cell and an electric device are provided. An electrode assembly of the battery cell includes an electrode plate group and a separator. The electrode plate group includes a positive electrode plate and a negative electrode plate stacked along a first direction. The separator is configured to separate the positive electrode plate from the negative electrode plate. The separator includes a first termination section and a second termination section, where the first termination section is located on one side of the electrode plate group along the first direction, the second termination section is located on one side of the electrode plate group along a second direction, and the first direction is perpendicular to the second direction. This design helps to improve the cycling performance and thermal performance of the battery cell and improve the structural stability of the battery cell.

## Description

### CROSS-REFERENCE TO RELATED APPLICATIONS

This application claims priority to Chinese Patent Application No. 2023114904119, filed on November 09, 2023 and entitled "BATTERY CELL AND ELECTRIC DEVICE", which is incorporated herein by reference with its entirety.

### TECHNICAL FIELD

This application relates to the technical field of batteries, and specifically relates to a battery cell and an electric device.

### BACKGROUND

Battery cells are widely used in portable electronic devices, electric transportation tools, electric tools, drones, energy storage devices, and other fields.

With the development of commercialization of battery cells, the market has increasingly higher requirements on the quality of battery cells. In an existing stacked battery cell, the separator is usually terminated at only one position. The problem in such structure is that when the battery cell swells and contracts during charging and discharging, the separator terminated at this position is at a risk of moving, resulting in structural instability of the battery cell, thereby leading to degraded cycling performance, drop resistance, and high-temperature thermal stability of the battery cell. In addition, when more than one separator is provided in a stacked battery cell, in the prior art, a termination position of the separator is usually restricted in two parallel directions to maintain the symmetry of the overall structure of the battery cell. However, such structure easily causes severe unevenness on surfaces of electrode plates, which on the one hand increases the thickness and on the other hand leads to degraded overall stability of the battery cell. When two sides in another direction are both not covered, structural instability of the electrode plate group in the battery cell occurs, resulting in degraded drop resistance of the battery cell. Such structure also results in a large distance between a positive electrode plate and a negative electrode plate in the battery cell, which degrades the kinetic performance of the battery cell, degrades the cycling performance, and reduces the heat resistance. Therefore, how to design an appropriate termination structure to improve the thermal performance and cycling performance of the battery cell has become an urgent problem to be solved in the technical field of batteries.

### SUMMARY

Some embodiments of this application provide a battery cell and an electric device to improve the thermal performance and cycling performance of the battery cell.

In a first aspect, an embodiment of this application provides a battery cell, where the battery cell includes an electrode assembly, the electrode assembly includes an electrode plate group and a separator. The electrode plate group includes a positive electrode plate and a negative electrode plate stacked along a first direction. The separator is configured to separate the positive electrode plate from the negative electrode plate. The separator includes a first termination section and a second termination section, the first termination section is located on one side of the electrode plate group along the first direction, the second termination section is located on one side of the electrode plate group along a second direction, and the first direction is perpendicular to the second direction.

As compared with a case where the first termination section and the second termination section are terminated on the same side of the electrode plate group, in the above technical solution, the first termination section is terminated on one side of the electrode plate group in the first direction, and the second termination section is terminated on one side of the electrode plate group in the second direction, so both the first termination section and the second termination section are well fixed, wrinkles of electrode plates can be reduced during charge-discharge testing, and volumetric energy density loss caused by increased thickness of the electrode assembly due to termination of the first termination section and the second termination section on the same side of the electrode plate group can be avoided. In this solution, the first termination section and the second termination section are terminated on one side of the electrode plate group in the first direction and on one side of the electrode plate group in the second direction, respectively. On the one hand, this can mitigate uneven stress on the electrode plate group in one direction and also reduce the risk of relative displacement of the positive electrode plate, negative electrode plate, and separator, thereby more effectively stabilizing the overall structure of the battery cell and improving the drop resistance and puncture test performance of the battery cell. On the other hand, this design allows a small distance to be maintained between the positive electrode plate and the negative electrode plate, which helps to improve the cycling performance of the battery cell. This design helps to improve the cycling performance and thermal performance of the battery cell and improve the structural stability of the battery cell.

In some embodiments of the first aspect of this application, along the second direction, a length of the first termination section is H₁, a length of the electrode assembly is H, and H₁/H ≥ 0.5.

In the above technical solution, H₁/H ≥ 0.5 allows the first termination section to have a large coverage area in the second direction of the electrode plate group, which helps to improve the stability of the first termination section and the safety performance of the battery cell.

In some embodiments of the first aspect of this application, 0.5 ≤ H₁/H < 1.

In the above technical solution, 0.5 ≤ H₁/H < 1 not only allows the first termination section to have a large coverage area in the second direction to improve the stability of the first termination section and the safety of the battery cell, but also allows the first termination section to provide good insulation and separation on one side of the electrode plate group in the first direction, further improving the safety performance of the battery cell. H₁/H < 1 also reserves space for a fixing member that fixes the first termination section, facilitating fixation of the second termination section.

In some embodiments of the first aspect of this application, 0.8 ≤ H₁/H < 1.

In the above technical solution, 0.8 ≤ H₁/H < 1 allows the first termination section to have a large coverage area in the second direction of the electrode plate group to improve the stability of the first termination section, and also reserves more space in the second direction for the fixing member that fixes the first termination section, thereby further improving the stability of the first termination section.

In some embodiments of the first aspect of this application, along the first direction, a length of the second termination section is L₁, a thickness of the electrode assembly is L, and L₁/L ≥ 0.5.

In the above technical solution, L₁/L ≥ 0.5 allows the second termination section to have a large coverage area in the first direction of the electrode plate group, which helps to improve the stability of the second termination section and the safety of the battery cell.

In some embodiments of the first aspect of this application, 0.5 ≤ L₁/L ≤ 0.9.

In the above technical solution, 0.5 ≤ L₁/L ≤ 0.9 not only allows the second termination section to have a large coverage area in the first direction of the electrode plate group to improve the stability of the second termination section and the safety of the battery cell, but also allows the second termination section to provide good insulation and separation on one side of the electrode plate group in the second direction, further improving the safety performance of the battery cell.

In some embodiments of the first aspect of this application, 0.5 ≤ L₁/L ≤ 0.7.

In the above technical solution, 0.5 ≤ L₁/L ≤ 0.7 not only allows the second termination section to have a large coverage area in the first direction of the electrode plate group to improve the stability of the second termination section and the safety of the battery cell, but also allows the second termination section to have good flatness and insulation and separation capability.

In some embodiments of the first aspect of this application, at least one of the following conditions is satisfied:
condition I: a maximum pore size of the separator is M, and 0.03 µm ≤ M ≤ 1 µm; or
condition II: a minimum pore size of the separator is N, and 0.01 µm ≤ N ≤ 0.03 µm.

In the above technical solution, 0.03 µm ≤ M ≤ 1 µm allows the separator to have good wettability and excellent heat resistance and also allows the separator to have good strength and insulation and separation capability, thereby improving the high-temperature cycling performance. 0.01 µm ≤ N ≤ 0.03 µm allows the separator to have good wettability and also allows the separator to have good strength and insulation and separation capability.

In some embodiments of the first aspect of this application, at least one of the following conditions is satisfied: $0.04 μm \leq M \leq 1 μm ;$ or $0.01 μm \leq N \leq 0.02 μm .$

In the above technical solution, 0.04 µm ≤ M ≤ 1 µm allows the separator to have better strength and insulation and separation capability. 0.01 µm ≤ N ≤ 0.02 µm allows the separator to further have better structural strength, improving heat shrinkage resistance and high-temperature cycling stability of the separator.

In some embodiments of the first aspect of this application, the positive electrode plate is bonded to the separator, a bonding strength between the positive electrode plate and the separator is F₁, and 1 N/m ≤ F₁ ≤ 40 N/m.

In the above technical solution, bonding the positive electrode plate to the separator allows the positive electrode plate and the separator to be integrally formed, reducing the risk of relative movement between the positive electrode plate and the separator. Bonding the positive electrode plate to the separator can also restrain the separator and reduce the risk of wrinkling or heat-induced curling of the separator. 1 N/m ≤ F₁ ≤ 40 N/m ensures stable bonding between the negative electrode plate and the separator during normal operation of the battery cell to improve the stability of the battery cell, allows the entirety formed by the positive electrode plate and the separator to have good wettability, and also reduces the risk of side reactions between an adhesive material and the electrolyte, so that the battery cell has good cycling capability.

In some embodiments of the first aspect of this application, the negative electrode plate is bonded to the separator, a bonding strength between the negative electrode plate and the separator is F₂, and 1 N/m ≤ F₂ ≤ 45 N/m.

In the above technical solution, bonding the negative electrode plate to the separator allows the negative electrode plate and the separator to be integrally formed, reducing the risk of relative movement between the negative electrode plate and the separator. Bonding the negative electrode plate to the separator can also restrain the separator and reduce the risk of wrinkling or heat-induced curling of the separator. 1 N/m ≤ F₂ ≤ 45 N/m ensures stable bonding between the negative electrode plate and the separator during normal operation of the battery cell to improve the stability of the battery cell, allows the entirety formed by the negative electrode plate and the separator to have good wettability, and also reduces the risk of side reactions between an adhesive material and the electrolyte, so that the battery cell has good cycling capability.

In some embodiments of the first aspect of this application, along the first direction, a thickness of the electrode assembly is L, and 5 cm ≤ L ≤ 30 cm.

In the above technical solution, 5 cm ≤ L ≤ 30 cm makes the battery cell have an appropriate size and be adaptable to more use scenarios.

In some embodiments of the first aspect of this application, 10 cm ≤ L ≤ 25 cm.

In the above technical solution, 10 cm ≤ L ≤ 25 cm makes the battery cell have an appropriate size and be adaptable to more use scenarios.

In some embodiments of the first aspect of this application, the separator includes a substrate layer and a ceramic layer, and along a thickness direction of the separator, the ceramic layer is provided on at least one side of the substrate layer.

In the above technical solution, the separator includes a ceramic layer, and the ceramic layer can improve the heat resistance, anti-curling performance, and the like of the separator.

In some embodiments of the first aspect of this application, a thickness of the ceramic layer is K₁, and 0.5 µm ≤ K₁ ≤ 8 µm.

In the above technical solution, 0.5 µm ≤ K₁ ≤ 8 µm provides the ceramic layer with an appropriate thickness, which can improve the heat resistance and anti-curling performance of the separator while reducing space occupation.

In some embodiments of the first aspect of this application, the separator further includes a plurality of separation sections and a plurality of bending sections, each separation section is disposed between adjacent positive electrode plate and negative electrode plate, and each bending section connects two adjacent separation sections.

In the above technical solution, each bending section connects two adjacent separation sections, so that the two adjacent separation sections can restrain each other through the bending section, reducing the risk of displacement of the separation sections and improving the safety performance of the battery cell.

In some embodiments of the first aspect of this application, the plurality of bending sections include a first bending section facing the negative electrode plate; and along the second direction, a distance between the negative electrode plate and the first bending section is K, and 0 mm ≤ K ≤ 0.9 mm.

In the above technical solution, the distance K between the negative electrode plate and the first bending section facing the negative electrode plate satisfying 0 mm ≤ K ≤ 0.9 mm can reduce the risk of wrinkling of the negative electrode plate caused by squeezing by the negative electrode plate when the separator is bent, and can also reserve some space to mitigate lithium precipitation at corners of the electrode plate.

In some embodiments of the first aspect of this application, the separator further includes a plurality of separation sections, a first extension section, and a second extension section, each separation section is disposed between adjacent positive electrode plate and negative electrode plate, the plurality of separation sections include a first separation section and a second separation section, one end of the first extension section is connected to one end of the first separation section along the second direction and is wound along a circumferential direction of the electrode plate group, one end of the second extension section is connected to one end of the second separation section along the second direction and is wound along a circumferential direction of the electrode plate group, the first termination section is at least part of the first extension section, the second termination section is at least part of the second extension section, and the circumferential direction of the electrode plate group is a direction around a third direction. The first extension section is located on an outer side of the second extension section.

In the above technical solution, the first extension section is wound along the circumferential direction of the electrode plate group, a first termination end is located on one side of the electrode plate group in the first direction, the second extension section is located on an outer side of the first extension section, the second extension section is wound along the circumferential direction of the electrode plate group, and a second termination end is located on one side of the electrode plate group in the second direction, thereby improving the stability of the first extension section and reducing the risk of the first extension section being pulled in the first direction of the electrode plate group to leave from one side of the electrode plate group in the second direction due to swelling of the battery cell. With the first termination section of the first extension section and the second termination section of the second extension section located on one side of the electrode plate group in the first direction and on one side in the second direction respectively, the problem of uneven stress on the electrode plate in the first direction of the electrode plate group can be mitigated, thereby improving the stability of the battery cell. Both the first extension section and the second extension section extend along the circumferential direction of the electrode plate group, which can restrain the entirety formed by the electrode plate group and the plurality of separation sections, allowing a small distance to be maintained between the positive electrode plate and the negative electrode plate, helping to improve the cycling performance of the battery cell, reducing the risk of relative displacement of the positive electrode plate, negative electrode plate, and separation sections, and improving the structural stability of the electrode assembly. This design helps to improve the cycling performance and thermal performance of the battery cell and improve the structural stability of the battery cell. As compared with a case where termination positions of both the first extension section and the second extension section are located on the same side of the electrode plate group, this design can reduce the risk of wrinkling of the separator and detachment of the first extension section and second extension section from fixation, increase the pass rate of drop tests and puncture tests of the battery cell, and improve the stability of the battery cell.

In some embodiments of the first aspect of this application, an end of the first extension section away from the first separation section is a first termination end, an end of the second extension section away from the second separation section is a second termination end, and along a winding direction of the first extension section, a distance by which the first extension section extends beyond the second termination end does not exceed two circumferential lengths of the electrode plate group.

In the above technical solution, along the winding direction of the first extension section, the distance by which the first extension section extends beyond the second termination end does not exceed two circumferential lengths of the entire electrode plate group, preventing degradation of the cycling performance of the battery cell caused by degraded wettability of the electrode assembly due to excessive winding layers of the first extension section in the circumferential direction of the electrode plate group and also reducing the impact of the first extension section and second extension section on the size of the electrode assembly, thereby allowing the battery cell to have high energy density.

In some embodiments of the first aspect of this application, the first separation section and the second separation section are two separation sections farthest apart along the first direction among the plurality of separation sections.

In the above technical solution, the first separation section and the second separation section being two separation sections farthest apart along the first direction among the plurality of separation sections facilitates connection of the first extension section and the second extension section, helps to reduce winding lengths of the first extension section and second extension section, and helps to reduce thicknesses of the first extension section and second extension section on the outer circumference of the electrode plate group, thereby allowing the electrode assembly to have good wettability, allowing the electrode assembly to have an appropriate overall size, and helping to increase the energy density of the battery cell.

In some embodiments of the first aspect of this application, the separator includes a first separator and a second separator, the first separator includes at least the first separation section and the first extension section, and the second separator includes at least the second separation section and the second extension section.

In the above technical solution, the first separator and the second separator are arranged separately, so that the separator is divided into a plurality of short portions, facilitating stacking of the separator, positive electrode plate, and negative electrode plate.

In some embodiments of the first aspect of this application, the separator is an integrally formed structure.

In the above technical solution, the separator being an integrally formed structure facilitates manufacturing of the electrode assembly and reduces the risk of relative movement between the separation section, positive electrode plate, and negative electrode plate, helping to improve the safety performance of the battery cell.

In some embodiments of the first aspect of this application, the battery cell includes two or more electrode assemblies connected in parallel.

In the above technical solution, connecting two or more electrode assemblies in parallel can further increase the energy density of a battery or an electric device.

In a second aspect, an embodiment of this application provides an electric device, where the electric device includes the battery cell provided in any one of the foregoing embodiments.

In the above technical solution, the battery cell provided in any one of the foregoing embodiments has good stability. By designing different termination positions for an inner-layer separator and an outer-layer separator, one separator is terminated on one side in a length direction of the battery cell and the other is terminated in a thickness direction of the battery cell. As compared with a conventional method in which a double-layer separator is terminated at one position, this two-position termination design can improve the wettability of the separator, thereby improving the cycling performance of the battery. In addition, separators terminated at two different positions can evenly dissipate heat without accumulating heat in one place, improving the thermal performance of the battery cell. Moreover, in an abuse test such as a drop test of the battery cell, the outer-layer separator wraps the inner-layer separator and the termination positions of the two separators are different, so that the battery cell has better structural stability. Further, power use safety and power use stability of an electric device powered by the battery cell can be improved.

### BRIEF DESCRIPTION OF DRAWINGS

To illustrate the technical solutions of some embodiments of this application more clearly, the following briefly describes the drawings that need to be used in some embodiments. It should be understood that the drawings below show only some embodiments of this application and therefore should not be regarded as limiting the scope. Persons of ordinary skill in the art may still derive other related drawings from these drawings without creative efforts.
FIG. 1 is a cross-sectional view of a battery cell according to some embodiments of this application;
FIG. 2 is a cross-sectional view of a battery cell according to some other embodiments of this application;
FIG. 3 is a schematic diagram illustrating separate arrangement of a positive electrode plate and a positive electrode tab according to some embodiments of this application;
FIG. 4 is a schematic diagram illustrating separate arrangement of a positive electrode plate and a positive electrode tab from another perspective according to some embodiments of this application;
FIG. 5 is a schematic diagram illustrating integral formation of a positive electrode plate and a positive electrode tab according to some embodiments of this application;
FIG. 6 is a schematic diagram illustrating separate arrangement of a negative electrode plate and a negative electrode tab according to some embodiments of this application;
FIG. 7 is a schematic diagram illustrating separate arrangement of a negative electrode plate and a negative electrode tab from another perspective according to some embodiments of this application;
FIG. 8 is a schematic diagram illustrating integral formation of a negative electrode plate and a negative electrode tab according to some embodiments of this application;
FIG. 9 is a schematic structural diagram of a separator according to some embodiments of this application;
FIG. 10 is a schematic structural diagram of an electrode assembly according to some embodiments of this application;
FIG. 11 is a schematic structural diagram of a separator in FIG. 10;
FIG. 12 is a schematic structural diagram of an electrode assembly according to some embodiments of this application;
FIG. 13 is a schematic structural diagram of a separator in FIG. 12;
FIG. 14 is a schematic structural diagram of an electrode assembly according to some other embodiments of this application;
FIG. 15 is a schematic structural diagram of a separator in FIG. 14;
FIG. 16 is a schematic structural diagram of an electrode assembly according to still some other embodiments of this application;
FIG. 17 is a schematic structural diagram of an electrode assembly according to yet some other embodiments of this application;
FIG. 18 is a schematic structural diagram of an electrode assembly according to some embodiments of this application;
FIG. 19 is a schematic structural diagram of an electrode assembly according to still some embodiments of this application;
FIG. 20 is a schematic structural diagram of a separator in FIG. 19;
FIG. 21 is a schematic structural diagram of a separator in FIG. 18;
FIG. 22 is a schematic structural diagram of an electrode assembly according to further some embodiments of this application; and
FIG. 23 is a schematic structural diagram of an electrode assembly according to still further some embodiments of this application.

Reference numerals: 100. battery cell; 10. electrode assembly; 11. electrode plate group; 111. positive electrode plate; 1111. positive electrode current collector; 1112. positive electrode active material layer; 1113. positive electrode tab groove; 112. negative electrode plate; 1121. negative electrode current collector; 1122. negative electrode active material layer; 1123. negative electrode tab groove; 12. separator; 121. separation section; 121a. first separation section; 121b. second separation section; 122. first extension section; 1221. first termination section; 1222. first termination end; 123. second extension section; 1231. second termination section; 1232. second termination end; 124. substrate layer; 125. ceramic layer; 126. bending section; 126a. first bending section; 126b. second bending section; 13. positive electrode tab; 14. negative electrode tab; 15. first bonding layer; 16. first tape; 17. second bonding layer; 18. second tape; 20. housing; X. first direction; Y. second direction; and Z. third direction.

### DETAILED DESCRIPTION

To make the objectives, technical solutions, and advantages of some embodiments of this application clearer, the following clearly and completely describes the technical solutions in some embodiments of this application with reference to the drawings in some embodiments of this application. Apparently, the described embodiments are some embodiments rather than all embodiments of this application. The components of some embodiments of this application generally described and illustrated in the drawings herein may be arranged and designed in a variety of different configurations.

Therefore, the following detailed description of some embodiments of this application provided in the drawings is not intended to limit the scope of this application as claimed, but merely represents selected embodiments of this application. All other embodiments obtained by persons of ordinary skill in the art based on some embodiments of this application without creative efforts shall fall within the protection scope of this application.

It should be noted that, without conflict, some embodiments of this application and features in these embodiments may be combined with each other.

It should be noted that similar reference numerals and letters in the following drawings represent similar items. Therefore, once an item is defined in one drawing, it does not need to be further defined or explained in subsequent drawings.

In the description of some embodiments of this application, it should be noted that the indicated orientation or positional relationship is based on the orientation or positional relationship shown in the drawings, or the orientation or positional relationship usually for placing the product of this application, or the orientation or positional relationship that is usually understood by persons skilled in the art, is only for ease of describing this application and simplifying the description rather than indicating or implying that the indicated apparatus or element must have a specific orientation or be constructed and operated in a specific orientation. Therefore, it cannot be understood as a limitation on this application. In addition, the terms "first", "second", "third", and the like are used only for distinguishing description and should not be understood as indicating or implying relative importance.

At present, from the perspective of market development, battery cells are increasingly widely used. Battery cells are widely used in electric transportation tools such as electric bicycles, electric motorcycles, and electric vehicles, as well as electric tools, drones, energy storage devices, and many other fields. With the continuous expansion of the application fields of battery cells, their market demand is also constantly increasing.

A battery cell includes an electrode assembly. The electrode assembly includes a stacked electrode assembly and a wound electrode assembly. For a stacked electrode assembly, the stacked electrode assembly includes a positive electrode plate, a negative electrode plate, and a separator, where a portion of the separator is stacked between the positive electrode plate and the negative electrode plate to insulate and separate the positive electrode plate from the negative electrode plate. Two termination sections of the separator are disposed around the outer circumference of the electrode assembly. In the related art, the two termination sections are terminated on one side in a thickness direction of the electrode assembly, or the two termination sections are fixed to one side in a length direction of the electrode assembly. For a common stacked battery cell, the length direction of the electrode assembly refers to the length direction along the electrode plate and this direction is perpendicular to a direction in which a tab extends out. For an irregular stacked battery cell, it means that if the two termination sections are terminated on one side of a thickness direction of the electrode assembly along the separator, uneven stress may be applied to a side of the electrode assembly in the thickness direction; and if the two termination sections are terminated on a side of the length direction of the electrode assembly, glue is required for bonding the separator. This complicates the process, and the glue is likely to be molten during formation or a hotbox test of the battery cell, causing a failure in fixing the separator and posing a safety hazard to the battery cell. In addition, during swelling of the battery cell, the extension section terminated on one side in the length direction is easily pulled along the thickness direction of the electrode assembly. This design cannot stabilize the entire battery cell, and easily causes wrinkling of the separator and detachment of the extension section from fixation, which is unfavorable for the battery cell to pass drop and puncture tests and severely affects the stability of the battery cell. Moreover, termination of the two termination sections on the same side of the electrode assembly cannot provide good fixation, and during charge-discharge testing, swelling of the battery cell causes wrinkling of the electrode plate. Furthermore, termination of the two termination sections on the same side of the electrode assembly increases the thickness on that side, resulting in loss of volumetric energy density. If the two termination sections are terminated on two sides in parallel directions, thickness is increased and the overall stability of the battery cell is degraded. The two sides in another direction are both not covered, resulting in degraded drop resistance of the battery cell.

Based on the above considerations, to alleviate the problem of poor performance of the battery cell caused by inappropriate termination positions of the two termination sections of the separator, an embodiment of this application provides a battery cell. The battery cell includes an electrode assembly. The electrode assembly includes an electrode plate group and a separator. The electrode plate group includes a positive electrode plate and a negative electrode plate stacked along a first direction. The separator is configured to separate the positive electrode plate from the negative electrode plate; where the separator includes a first termination section and a second termination section. The first termination section is located on one side of the electrode plate group along the first direction, the second termination section is located on one side of the electrode plate group along a second direction, and the first direction is perpendicular to the second direction.

As compared with a case where the first termination section and the second termination section are terminated on the same side of the electrode plate group, the first termination section is terminated on one side of the electrode plate group in the first direction, and the second termination section is terminated on one side of the electrode plate group in the second direction, so both the first termination section and the second termination section are well fixed, wrinkles of the electrode plates can be reduced during charge-discharge testing, and volumetric energy density loss caused by increased thickness of the electrode assembly due to termination of the first termination section and the second termination section on the same side of the electrode plate group can be avoided.

In this solution, the first termination section and the second termination section are terminated on one side of the electrode plate group in the first direction and on one side of the electrode plate group in the second direction, respectively. On the one hand, this can mitigate uneven stress on the electrode plate group in one direction and reduce the risk of relative displacement of the positive electrode plate, negative electrode plate, and separator, thereby more effectively stabilizing the overall structure of the battery cell and improving the drop resistance and puncture test performance of the battery cell. On the other hand, this design allows a small distance to be maintained between the positive electrode plate and the negative electrode plate, which helps to improve the cycling performance of the battery cell. This design helps to improve the cycling performance and thermal performance of the battery cell and improve the structural stability of the battery cell.

The battery cell disclosed in this embodiment of this application may be used in but not limited to electric devices such as electric two-wheelers, electric tools, drones, and energy storage devices. A battery cell with the operating conditions of this application may alternatively be used as a power supply system of an electric device, which helps to improve the thermal performance and cycling performance of the battery cell as well as power use safety and power use stability of the electric device.

An embodiment of this application provides an electric device using a battery cell as a power supply. The electric device may be but is not limited to an electronic device, an electric tool, an electric transportation tool, a drone, and an energy storage device. The electronic device may include a mobile phone, a tablet, a laptop, or the like; the electric tool may include an electric drill, an electric saw, or the like; and the electric transportation tool may include an electric vehicle, an electric motorcycle, an electric bicycle, or the like.

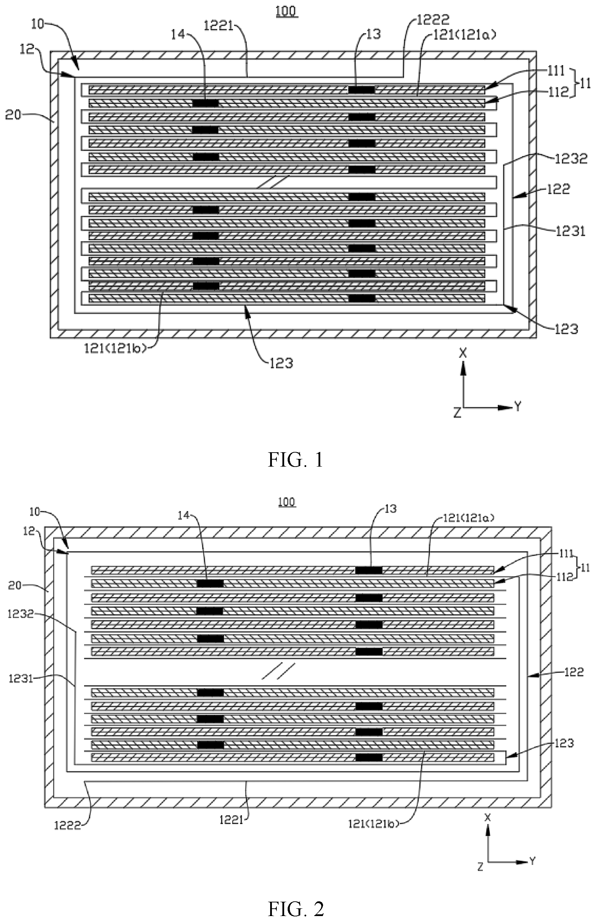

As shown in FIG. 1 and FIG. 2, an embodiment of this application provides a battery cell 100. The battery cell 100 includes an electrode assembly 10. The electrode assembly 10 includes an electrode plate group 11 and a separator 12. The electrode plate group 11 includes a positive electrode plate 111 and a negative electrode plate 112 stacked along a first direction X. The separator 12 is configured to separate the positive electrode plate 111 from the negative electrode plate 112. The separator 12 includes a first termination section 1221 and a second termination section 1231. The first termination section 1221 is located on one side of the electrode plate group 11 along the first direction X, the second termination section 1231 is located on one side of the electrode plate group 11 along a second direction Y, and the first direction X is perpendicular to the second direction Y.

As compared with a case where the first termination section 1221 and the second termination section 1231 are terminated on the same side of the electrode plate group, the first termination section 1221 is terminated on one side of the electrode plate group 11 in the first direction X, and the second termination section 1231 is terminated on one side of the electrode plate group 11 in the second direction Y, so both the first termination section 1221 and the second termination section 1231 are well fixed, wrinkles of the electrode plates can be reduced during charge-discharge testing, and volumetric energy density loss caused by increased thickness of the electrode assembly 10 due to termination of the first termination section 1221 and the second termination section 1231 on the same side of the electrode plate group 11 can be avoided. In this solution, the first termination section 1221 and the second termination section 1231 are terminated on one side of the electrode plate group 11 in the first direction X and on one side of the electrode plate group 11 in the second direction Y, respectively. On the one hand, this can mitigate uneven stress on the electrode plate group 11 in one direction and reduce the risk of relative displacement of the positive electrode plate 111, negative electrode plate 112, and separator 12, thereby more effectively stabilizing the overall structure of the battery cell 100 and improving the drop resistance and puncture test performance of the battery cell 100. On the other hand, this design allows a small distance to be maintained between the positive electrode plate 111 and the negative electrode plate 112, which helps to improve the cycling performance of the battery cell 100. This design helps to improve the cycling performance and thermal performance of the battery cell 100 and improve the structural stability of the battery cell 100.

It should be noted that the first termination section 1221 is not a position where the separator 12 is terminated in a process, but is a section of the separator 12 that provides a fixing function; and the second termination section 1231 is not a position where the separator 12 is terminated in a process, but is another section of the separator 12 that provides a fixing function.

In the stacked electrode assembly 10, the positive electrode plate 111 and the negative electrode plate 112 are alternately stacked one or more times. A portion of the separator 12 is stacked between adjacent positive electrode plate 111 and negative electrode plate 112 to insulate and separate the positive electrode plate 111 from the negative electrode plate 112. A stacking direction of the positive electrode plate 111 and the negative electrode plate 112 is the first direction X, which is also a thickness direction of the battery cell 100 or a thickness direction of the electrode assembly 10. The second direction Y may be a length direction of the battery cell 100 or a length direction of the electrode assembly 10, and this direction is perpendicular to a direction in which a tab extends out.

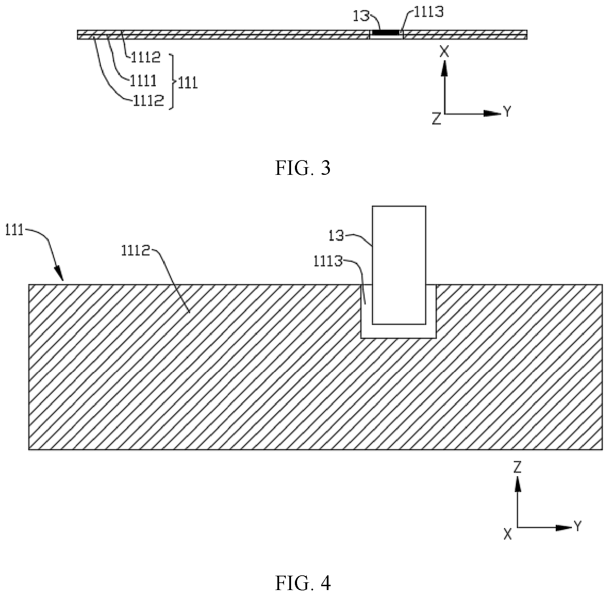

As shown in FIG. 3, the positive electrode plate 111 includes a positive electrode current collector 1111 and a positive electrode active material layer 1112. At least one side of the positive electrode current collector 1111 in the thickness direction is coated with the positive electrode active material layer 1112. The positive electrode current collector 1111 may be coated with the positive electrode active material layer 1112 on only one side, and the positive electrode current collector 1111 may alternatively be coated with the positive electrode active material layer 1112 on both sides. Taking a lithium-ion battery cell 100 as an example, the positive electrode current collector 1111 may be made of aluminum, and the positive electrode active material layer 1112 may be made of lithium cobalt oxide, lithium iron phosphate, ternary lithium, lithium manganate, or the like.

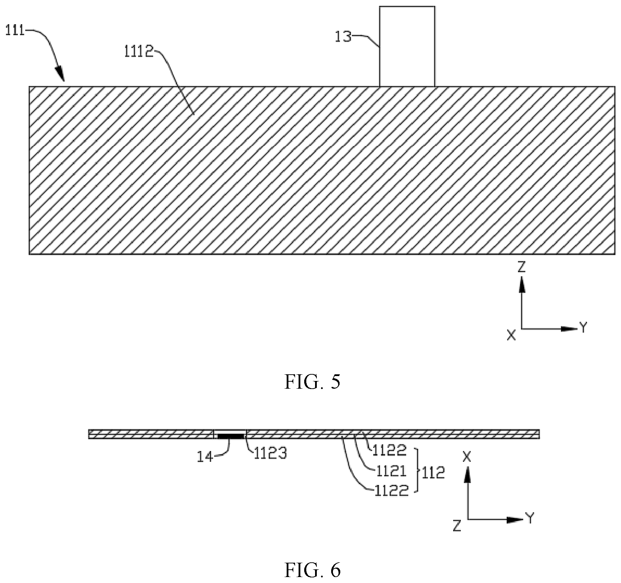

As shown in FIG. 6, the negative electrode plate 112 includes a negative electrode current collector 1121 and a negative electrode active material layer 1122. At least one side of the negative electrode current collector 1121 in the thickness direction is coated with the negative electrode active material layer 1122. The negative electrode current collector 1121 may be coated with the active material layer on only one side, and the negative electrode current collector 1121 may alternatively be coated with the negative electrode active material layer 1122 on both sides. The negative electrode current collector 1121 may be made of copper, and the negative electrode active material layer 1122 may be made of carbon, silicon, or the like.

As shown in FIG. 1 and FIG. 2, in some embodiments, the electrode assembly 10 further includes a positive electrode tab 13 and a negative electrode tab 14. The positive electrode tab 13 is electrically connected to the positive electrode plate 111, and the negative electrode tab 14 is electrically connected to the negative electrode plate 112. The positive electrode tab 13 extends along a third direction Z and the positive electrode tab 13 protrudes from one end of the positive electrode plate 111 along the third direction Z. The negative electrode tab 14 extends along one end along the third direction Z and the negative electrode tab 14 protrudes from one end of the negative electrode plate 112 along the third direction Z. The positive electrode tab 13 and the negative electrode tab 14 may be located on the same side in the third direction Z. The positive electrode tab 13 and the negative electrode tab 14 may alternatively be located on two opposite sides in the third direction Z, respectively. FIG. 1 and FIG. 2 show a case where the positive electrode tab 13 and the negative electrode tab 14 are located on the same side in the third direction Z.

It should be noted that the first direction X, the second direction Y, and the third direction Z are perpendicular to each other. The second direction Y is also the length direction of the battery cell 100, and the third direction Z is also the width direction of the battery cell 100.

As shown in FIG. 3 and FIG. 4, the positive electrode tab 13 and the positive electrode plate 111 may be arranged separately. A positive electrode tab groove 1113 is provided in the positive electrode active material layer 1112 of the positive electrode plate 111, the positive electrode current collector 1111 is exposed at a corresponding position of the positive electrode tab groove 1113, and a portion of the positive electrode tab 13 is accommodated in the positive electrode tab groove 1113 and connected to the positive electrode current collector 1111 at the corresponding position of the positive electrode tab groove 1113. The positive electrode tab 13 and the positive electrode current collector 1111 may be electrically connected by welding, conductive adhesive, riveting, or the like. In an embodiment where the positive electrode tab 13 and the positive electrode plate 111 are arranged separately, materials of the positive electrode tab 13 and the positive electrode current collector 1111 may be the same or different.

As shown in FIG. 5, the positive electrode tab 13 and the positive electrode plate 111 may alternatively be integrally formed, and the positive electrode current collector 1111 and the positive electrode tab 13 may be formed by die-cutting of a profile.

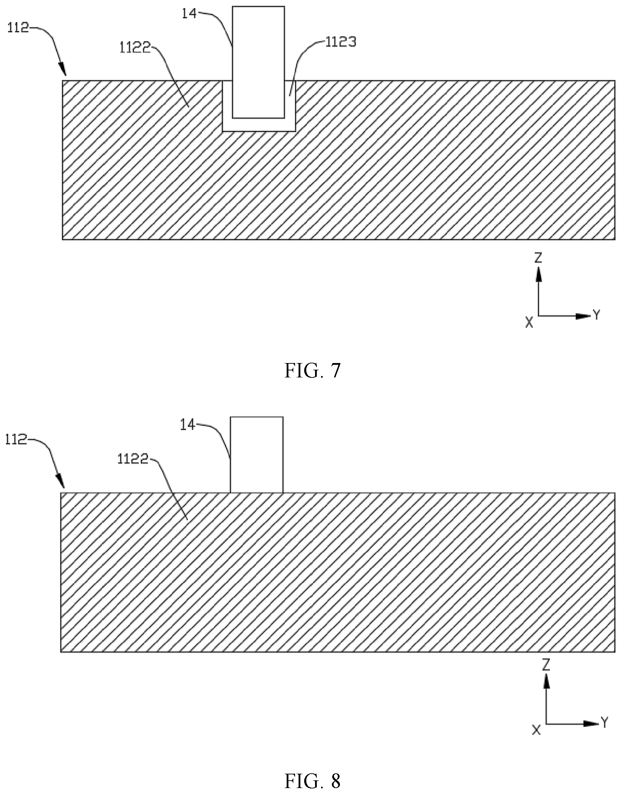

As shown in FIG. 6 and FIG. 7, the negative electrode tab 14 and the negative electrode plate 112 may be arranged separately. A negative electrode tab groove 1123 is provided in the negative electrode active material layer 1122 of the negative electrode plate 112, the negative electrode current collector 1121 is exposed at a corresponding position of the negative electrode tab groove 1123, and a portion of the negative electrode tab 14 is accommodated in the negative electrode tab groove 1123 and connected to the negative electrode current collector 1121 at the corresponding position of the negative electrode tab groove 1123. The negative electrode tab 14 and the negative electrode current collector 1121 may be electrically connected by welding, conductive adhesive, riveting, or the like. In an embodiment where the negative electrode tab 14 and the negative electrode plate 112 are arranged separately, materials of the negative electrode tab 14 and the negative electrode current collector 1121 may be the same or different.

As shown in FIG. 8, the negative electrode tab 14 and the negative electrode plate 112 may alternatively be integrally formed, and the negative electrode current collector 1121 and the negative electrode tab 14 may be formed by die-cutting of a profile.

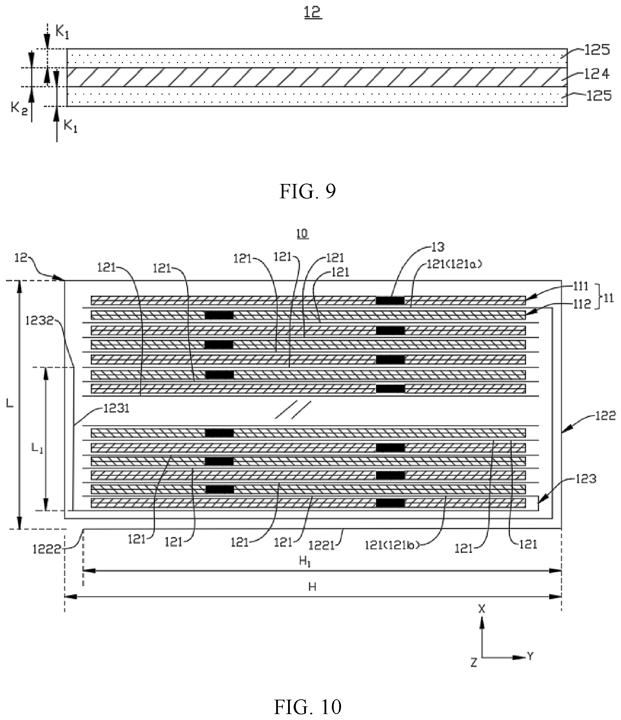

The separator 12 is configured to insulate and separate the positive electrode plate 111 from the negative electrode plate 112. As shown in FIG. 9, in some embodiments, the separator 12 includes a substrate layer 124 and a ceramic layer 125, and along a thickness direction of the separator 12, the ceramic layer 125 is provided on at least one side of the substrate layer 124.

The substrate layer 124 may be made of PP (polypropylene, polypropylene) or PET (polyethylene terephthalate, polyethylene terephthalate). Along the thickness direction of the separator 12, the substrate layer 124 may be provided with the ceramic layer 125 on only one side, or may be provided with the ceramic layer 125 on both sides. FIG. 9 shows a case where both sides of the substrate are provided with the ceramic layer 125.

The ceramic layer 125 may be provided on the surface of the substrate layer 124 in a variety of ways, for example, the ceramic layer 125 may be applied on the surface of the substrate layer 124, plated on the surface of a substrate, or bonded to the surface of the substrate with an adhesive.

The separator 12 includes the ceramic layer 125, and the ceramic layer 125 can improve the heat resistance, anti-curling performance, and the like of the separator 12.

As shown in FIG. 9, in some embodiments, a thickness of the ceramic layer 125 is K₁, and 0.5 µm ≤ K₁ ≤ 8 µm.

For example, K₁ may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, or the like.

When 0.5 µm ≤ K₁ ≤ 8 µm, the ceramic layer 125 has an appropriate thickness, which can improve the heat resistance of the separator 12, reduce local heat accumulation in the battery cell, and improve the anti-curling performance while reducing space occupation.

As shown in FIG. 9, in some embodiments, a thickness of the substrate is K₂, and 5 µm ≤ K₂ ≤ 30 µm.

For example, K₂ may be 5 µm, 7 µm, 10 µm, 13 µm, 15 µm, 17 µm, 20 µm, 23 µm, 25 µm, 27 µm, 30 µm, or the like.

When 5 µm ≤ K₂ ≤ 30 µm, the separator 12 has good structural strength, and the thickness of the separator 12 is controlled within an appropriate range, helping to improve the wettability of the electrode assembly 10.

In some other embodiments, the separator 12 may include only the substrate layer 124.

In some embodiments, the positive electrode plate 111 is bonded to the separator 12. The positive electrode plate 111 and the separator 12 may be bonded and connected by hot compounding, or an adhesive may be provided between the positive electrode plate 111 and the separator 12 so that the positive electrode plate 111 and the separator 12 are bonded via the adhesive.

Bonding the positive electrode plate 111 to the separator 12 allows the positive electrode plate 111 and the separator 12 to be integrally formed, reducing the risk of relative movement between the positive electrode plate 111 and the separator 12. Bonding the positive electrode plate 111 to the separator 12 can also restrain the separator 12 and reduce the risk of wrinkling or heat-induced curling of the separator 12.

In some embodiments, a bonding strength between the positive electrode plate 111 and the separator 12 is F₁, and 1 N/m ≤ F₁ ≤ 40 N/m.

For example, F₁ may be 1 N/m, 5 N/m, 10 N/m, 15 N/m, 20 N/m, 25 N/m, 30 N/m, 35 N/m, 40 N/m, or the like.

1 N/m ≤ F₁ ≤ 40 N/m ensures stable bonding between the negative electrode plate 112 and the separator 12 during normal operation of the battery cell 100, improves the stability of the battery cell 100, allows the entirety formed by the positive electrode plate 111 and the separator 12 to have good wettability, and also reduces the risk of side reactions between an adhesive material and the electrolyte, so that the battery cell 100 has good cycling capability.

In some embodiments, the negative electrode plate 112 is bonded to the separator 12. The negative electrode plate 112 and the separator 12 may be bonded and connected by hot compounding, or an adhesive may be provided between the negative electrode plate and the separator 12 so that the negative electrode plate 112 and the separator 12 are bonded via the adhesive.

In some embodiments, a bonding strength between the negative electrode plate 112 and the separator 12 is F₂, and 1 N/m ≤ F₂ ≤ 45 N/m.

For example, F₁ may be 1 N/m, 5 N/m, 10 N/m, 15 N/m, 20 N/m, 25 N/m, 30 N/m, 35 N/m, 40 N/m, 45 N/m, or the like.

1 N/m ≤ F₂ ≤ 45 N/m ensures stable bonding between the negative electrode plate 112 and the separator 12 during normal operation of the battery cell 100, improves the stability of the battery cell 100, allows the entirety formed by the negative electrode plate 112 and the separator 12 to have good wettability, and also reduces the risk of side reactions between the adhesive material and the electrolyte, so that the battery cell 100 has good cycling capability.

The bonding strength between the positive electrode plate 111 and the separator 12 and the bonding strength between the negative electrode plate 112 and the separator 12 may both be tested using methods known in the art. For example, a Gotech tensile machine is used to prepare a sample which is formed by integrally bonding a rectangular separator 12 with a width of 20 mm and a length of 60 mm to 70 mm to an electrode plate (positive electrode plate 111 or negative electrode plate 112, and a 90° peel test is performed to test a bonding strength between the separator 12 and the electrode plate (positive electrode plate 111 or negative electrode plate 112).

In some embodiments, a maximum pore size of the separator 12 is M, and 0.03 µm ≤ M ≤ 1 µm.

For example, M may be 0.03 µm, 0.1 µm, 0.2 µm, 0.3 µm, 0.4 µm, 0.5 µm, 0.6 µm, 0.7 µm, 0.8 µm, 0.9 µm, 1 µm, or the like.

0.03 µm ≤ M ≤ 1 µm allows the separator 12 to have good wettability and also allows the separator 12 to have good strength and insulation and separation capability. In some embodiments, 0.04 µm ≤ M ≤ 1 µm.

For example, M may be 0.04 µm, 0.05 µm, 0.15 µm, 0.25 µm, 0.35 µm, 0.45 µm, 0.55 µm, 0.65 µm, 0.75 µm, 0.85 µm, 0.95 µm, 1 µm, or the like.

0.04 µm ≤ M ≤ 1 µm allows the separator 12 to have better strength and insulation and separation capability.

In some embodiments, a minimum pore size of the separator 12 is N, and 0.01 µm ≤ N ≤ 0.03 µm.

For example, N may be 0.01 µm, 0.015 µm, 0.02 µm, 0.025 µm, 0.03 µm, or the like.

0.01 µm ≤ N ≤ 0.03 µm allows the separator 12 to have good wettability and also allows the separator 12 to have good strength and insulation and separation capability.

In some embodiments, 0.01 µm ≤ N ≤ 0.02 µm.

For example, N may be 0.01 µm, 0.012 µm, 0.013 µm, 0.017 µm, 0.018 µm, 0.02 µm, or the like.

0.01 µm ≤ N ≤ 0.02 µm allows the separator 12 to have better structural strength.

Therefore, controlling the maximum and minimum pore size ranges of the separator 12 is more conducive to improving the cycling performance of the battery cell 100. If the pore size of the separator 12 is excessively large, the electrolyte flows too fast, and thus lithium precipitation easily occurs at an anode; if the pore size of the separator 12 is excessively small, lithium ion migration is hindered, degrading the cycling performance.

The pore size of the separator 12 may be tested using the following method: a pore size distribution curve of the separator 12 is obtained using a PMI pore size tester, from which the minimum and maximum pore sizes of the separator 12 can be obtained.

A high-temperature cycling test method for the battery cell 100 is as follows: in an environment of 12°C to 45°C, the battery cell 100 is subjected to first-cycle charging and discharging, subjected to constant-current charging at a charging current density of 2C to a full charge voltage of 4.5 V, then subjected to constant-voltage charging at a maximum voltage until reaching a cutoff current of 0.02C, and then subjected to constant-current discharging at a discharging current of 0.5C until reaching a final voltage of 3.0 V; a discharge capacity of the first cycle is recorded; then 500 charge and discharge cycles are performed; and a discharge capacity of the 500th cycle is recorded. The discharge capacity of the 500th cycle divided by the discharge capacity of the first cycle is the cycling retention rate of the 500th cycle.

A shrinkage rate test method for the separator 12 is as follows: a prepared separator 12 is cut into 72.5 mm in an MD direction (a length direction of the separator 12) and 54.2 mm in a TD direction (a width direction of the separator 12), four corners are fixed to a piece of paper with tapes, the sample is placed in an oven at 135°C and baked for 1 h, and then the sample is taken out to test lengths I1 and I2 in the MD and TD directions, where thermal shrinkage in MD direction = (72.5-I1)/72.5, and thermal shrinkage in TD direction = (54.2-I2)/54.2. Data in Table 1 are obtained.

**Table 1**

| | M (µm) | N (µm) | K₁ (µm) | K₂ (µm) | Thermal shrinkage rate (TD) | Thermal shrinkage rate (MD) | High-temperature cycling test |
|---|---|---|---|---|---|---|---|
| Example 1-3 | 0.03 | 0.01 | 6 | 25 | 2.5% | 2.4% | 73.5% |
| Example 3-1 | 0.04 | 0.01 | 6 | 25 | 2.4% | 2.3% | 73.8% |
| Example 3-2 | 0.06 | 0.01 | 6 | 25 | 2.3% | 2.2% | 74.0% |
| Example 3-3 | 1 | 0.01 | 6 | 25 | 2% | 2% | 74.2% |
| Example 3-4 | 0.03 | 0.02 | 6 | 25 | 2.2% | 2.3% | 73.8% |
| Example 3-5 | 0.03 | 0.03 | 6 | 25 | 2.6% | 2.5% | 72.9% |
| Example 3-6 | 0.03 | 0.01 | 0.5 | 25 | 2.6% | 2.8% | 72.5% |
| Example 3-7 | 0.03 | 0.01 | 8 | 25 | 2.9% | 3.1% | 72.0% |
| Example 3-8 | 0.03 | 0.01 | 6 | 5 | 3.0% | 3.1% | 71.3% |
| Example 3-9 | 0.03 | 0.01 | 6 | 30 | 2.9% | 3.3% | 71.5% |
| Example 3-10 | 0.02 | 0.005 | 6 | 25 | 3.4% | 3.5% | 70.5% |

As can be seen from Table 1, from Examples 1-3, 3-1, 3-2, and 3-3, when the minimum pore size of the separator 12, the thickness of the ceramic layer 125, and the thickness of the substrate layer 124 remain unchanged, the thermal shrinkage rates of the separator 12 in the TD direction when the maximum pore sizes of the separator 12 are 0.03 µm, 0.04 µm, 0.06 µm, and 1 µm are 2.5%, 2.4%, 2.3%, and 2%, respectively, and the thermal shrinkage rates of the separator 12 in the MD direction are 2.4%, 2.3%, 2.2%, and 2%, respectively. As the maximum pore size gradually increases, the thermal shrinkage rates of the separator 12 in both the TD and MD directions gradually decrease, but the degree of decrease is small; the pass rates of the high-temperature test for the battery cell 100 are 73.5%, 73.8%, 74.0%, and 74.2%, respectively; and as the maximum pore size of the separator 12 gradually increases, the pass rate of the high-temperature test remains basically unchanged.

From Examples 1-3, 3-4, and 3-5, when the maximum pore size of the separator 12, the thickness of the ceramic layer 125, and the thickness of the substrate layer 124 remain unchanged, the thermal shrinkage rates of the separator 12 in the TD direction when the maximum pore sizes of the separator 12 are 0.03 µm, 0.04 µm, 0.06 µm, and 1 µm are 2.5%, 2.2%, and 2.6%, respectively, and the thermal shrinkage rates of the separator 12 in the MD direction are 2.4%, 2.3%, and 2.5%, respectively. As the minimum pore size gradually increases, the thermal shrinkage rates of the separator 12 in both the TD and MD directions first decrease and then increase, but the degree of change is small; the pass rates of the high-temperature test for the battery cell 100 are 73.5%, 73.8%, 72.9%, and 74.2%, respectively; and as the minimum pore size of the separator 12 gradually increases, the pass rate of the high-temperature test remains basically unchanged.

From Examples 3-1, 3-6, and 3-7, when the maximum pore size of the separator 12, the minimum pore size of the separator 12, and the thickness of the substrate layer 124 remain unchanged, the thermal shrinkage rates of the separator 12 in the TD direction when the thicknesses of the ceramic layer 125 are 6 µm, 0.5 µm, and 8 µm are 2.5%, 2.6%, and 2.9%, respectively, and the thermal shrinkage rates of the separator 12 in the MD direction are 2.4%, 2.8%, and 3.1%, respectively. As the thickness of the ceramic layer 125 gradually increases, the thermal shrinkage rates of the separator 12 in both the TD and MD directions first decrease and then increase, but the degree of change is small; the pass rates of the high-temperature test for the battery cell 100 are 73.5%, 72.5%, and 72.0%, respectively; and as the thickness of the ceramic layer 125 gradually increases, the pass rate of the high-temperature test first increases and then decreases, with a small degree of change as well.

From Examples 1-3, 3-8, and 3-9, when the maximum pore size of the separator 12, the minimum pore size of the separator 12, and the thickness of the ceramic layer 125 remain unchanged, the thermal shrinkage rates of the separator 12 in the TD direction when the thicknesses of the substrate layer 124 are 25 µm, 5 µm, and 30 µm are 2.5%, 3.0%, and 2.9%, respectively, and the thermal shrinkage rates of the separator 12 in the MD direction are 2.4%, 3.1%, and 3.3%, respectively. As the thickness of the substrate layer 124 gradually increases, the thermal shrinkage rates of the separator 12 in both the TD and MD directions first decrease and then increase, but the degree of change is small; the pass rates of the high-temperature cycling test for the battery cell 100 are 73.5%, 71.3%, and 71.5%, respectively; and as the thickness of the substrate layer 124 gradually increases, the pass rate of the high-temperature cycling test first increases and then decreases, with a small degree of change as well.

As shown in FIG. 1 and FIG. 2, in some embodiments, the separator 12 includes a plurality of separation sections 121, and each separation section 121 is disposed between adjacent positive electrode plate 111 and negative electrode plate 112; where the plurality of separation sections 121 include a first separation section 121a and a second separation section 121b. The separator 12 further includes a first extension section 122 and a second extension section 123; one end of the first extension section 122 is connected to one end of the first separation section 121a along the second direction Y and is wound along a circumferential direction of the electrode plate group 11, and the first termination section 1221 is at least part of the first extension section 122; one end of the second extension section 123 is connected to one end of the second separation section 121b along the second direction Y and is wound along a circumferential direction of the electrode plate group 11, and the second termination section 1231 is at least part of the second extension section 123; and the first extension section 122 is located on an outer side of the second extension section 123.

The first extension section is wound along the circumferential direction of the electrode plate group, a first termination end is located on one side of the electrode plate group in the first direction, the second extension section is located on an outer side of the first extension section, the second extension section is wound along a circumferential direction of the electrode plate group, and a second termination end is located on one side of the electrode plate group in the second direction, which can improve the stability of the first extension section and reduce the risk of the first extension section being pulled in the first direction of the electrode plate group to leave from one side of the electrode plate group in the second direction due to swelling of the battery cell. With the first termination section of the first extension section and the second termination section of the second extension section located on one side of the electrode plate group in the first direction and on one side in the second direction respectively, uneven stress on the electrode plate in the first direction of the electrode plate group can be mitigated, thereby improving the stability of the battery cell.

Both the first extension section and the second extension section extend along the circumferential direction of the electrode plate group, which can restrain the entirety formed by the electrode plate group and the plurality of separation sections, allowing a small distance to be maintained between the positive electrode plate and the negative electrode plate, helping to improve the cycling performance of the battery cell, reducing the risk of relative displacement of the positive electrode plate, negative electrode plate, and separation sections, and improving the structural stability of the electrode assembly. This design helps to improve the cycling performance and thermal performance of the battery cell and improve the structural stability of the battery cell. As compared with a case where the termination positions of both the first extension section and the second extension section are located on the same side of the electrode plate group, this design can reduce the risk of wrinkling of the separator and detachment of the first extension section and second extension section from fixation, increase the pass rate of drop tests and puncture tests of the battery cell, and improve the stability of the battery cell.

The first termination section may be the entirety of the first extension section. Understandably, the first termination section is the first extension section. The first termination section may be a portion of the first extension section, and another portion of the first extension section is disposed around the outer circumference of the electrode plate group in a winding direction of the first extension section.

The second termination section may be the entirety of the second extension section. Understandably, the second termination section is the second extension section. The second termination section may be a portion of the second extension section, and another portion of the second extension section is disposed around the outer circumference of the electrode plate group in a winding direction of the second extension section.

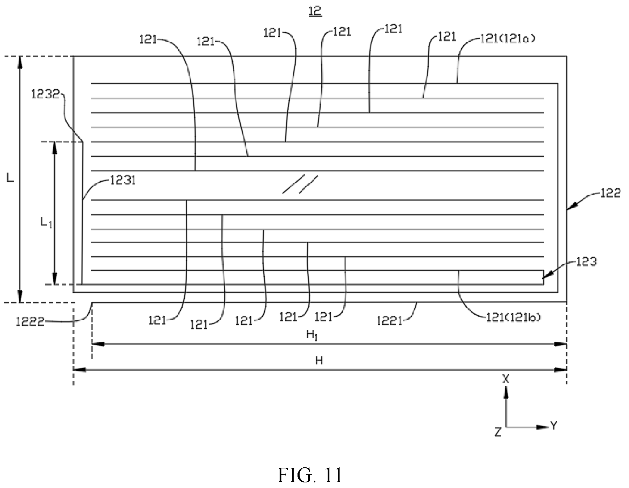

The separator 12 includes a plurality of separation sections 121. "A plurality of" means two or more. In some embodiments, as shown in FIG. 10 and FIG. 11, the plurality of separation sections 121 may be independent of each other, to be specific, they are not connected to each other.

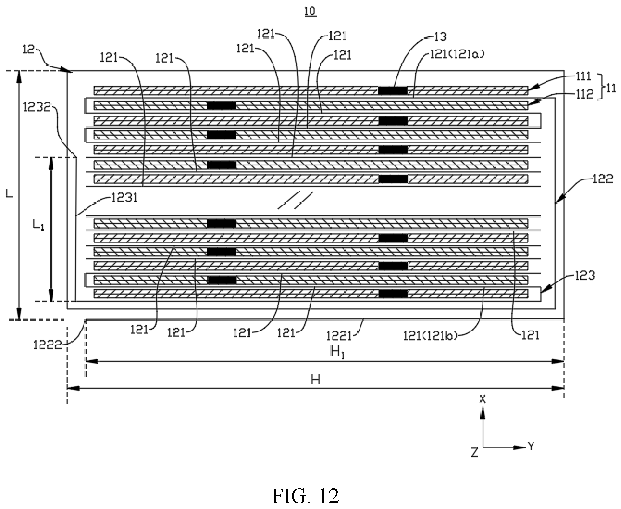

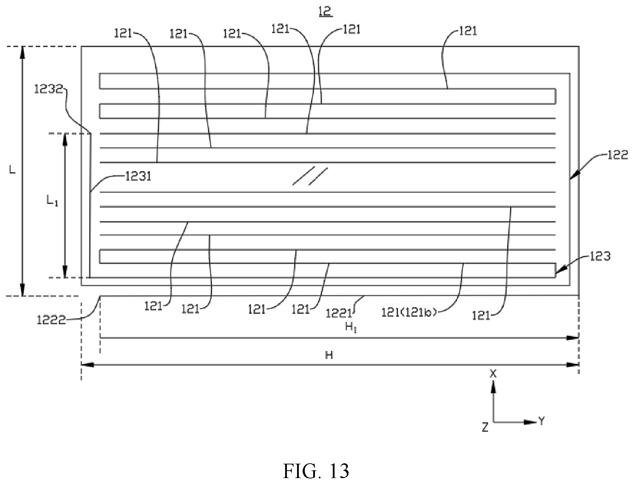

In some other embodiments, as shown in FIG. 12 and FIG. 13, some of the plurality of separation sections 121 are connected to each other, and some other of the separation sections 121 are independent of each other.

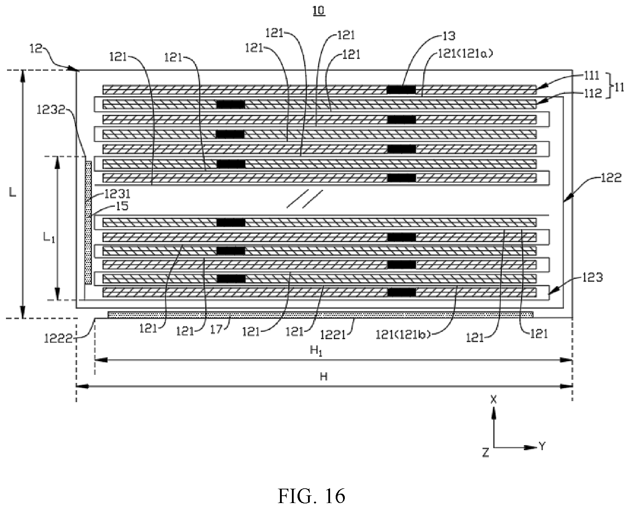

In still some other embodiments, the plurality of separation sections 121 may alternatively be sequentially connected (as shown in FIG. 16, FIG. 17, FIG. 18, and FIG. 21).

The first separation section 121a and the second separation section 121b may be any two first separation section 121a of the plurality of separation sections 121. As shown in FIG. 10 to FIG. 13, the first separation section 121a and the second separation section 121b are two separation sections 121 farthest apart along the first direction X among the plurality of separation sections 121, which facilitates connection of the first extension section 122 and the second extension section 123, helps to reduce winding lengths of the first extension section 122 and the second extension section 123, and helps to reduce the thicknesses of the first extension section 122 and the second extension section 123 on the outer circumference of the electrode plate group 11, thereby allowing the electrode assembly 10 to have good wettability. The overall size of the electrode assembly 10 facilitates an increase in the energy density of the battery cell 100.

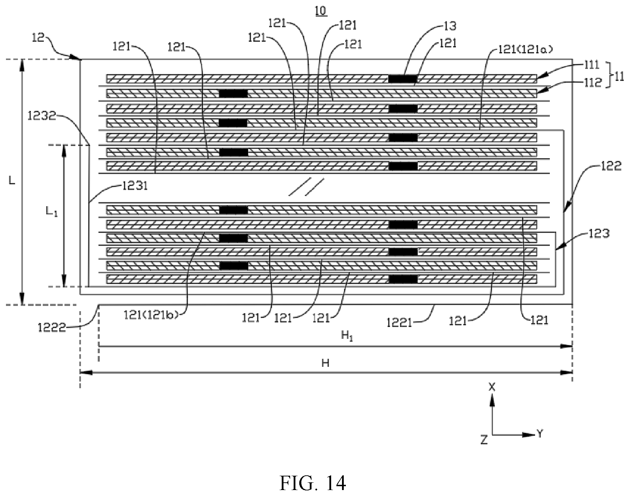

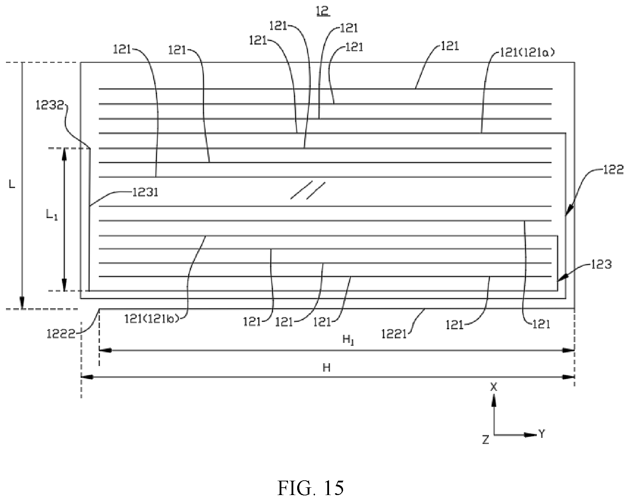

Certainly, the first separation section 121a and the second separation section 121b may alternatively be two separation sections 121 at other positions. As shown in FIG. 14 and FIG. 15, the first separation section 121a and the second separation section 121b are two separation sections 121 located in a middle region among the plurality of separation sections 121.

The first extension section 122 is connected to one end of the first separation section 121a along the second direction Y, and the second extension section 123 is connected to one end of the second separation section 121b along the second direction Y. The end of the first separation section 121a connected to the first extension section 122 and the end of the second separation section 121b connected to the second extension section 123 may be located on the same side in the second direction Y (as shown in FIG. 10 to FIG. 15). The end of the first separation section 121a connected to the first extension section 122 and the end of the second separation section 121b connected to the second extension section 123 may be located on two opposite sides in the second direction Y. The circumferential direction of the electrode plate group 11 is a direction around the third direction Z.

The first extension section 122 may be wound clockwise or counterclockwise along the circumferential direction of the electrode plate group 11. The second extension section 123 may be wound clockwise or counterclockwise along the circumferential direction of the electrode plate group 11. A winding direction of the first extension section 122 along the circumferential direction of the electrode plate group 11 and a winding direction of the second extension section 123 along the circumferential direction of the electrode plate group 11 may be the same or opposite.

Along the winding direction of the first extension section 122, the end of the first extension section 122 away from the first separation section 121a is located on any side in the first direction X. When viewed along the first direction X, a projection of the end of the first extension section 122 away from the first separation section 121a (the first termination end 1222 described thereinafter) falls within a projection of the electrode plate group 11.

Along the winding direction of the second extension section 123, the end of the second extension section 123 away from the second separation section 121b is located on any side in the second direction Y. When viewed along a thickness-length direction of the electrode plate group 11, a projection of the end of the second extension section 123 away from the second separation section 121b (the second termination end 1232 described thereinafter) falls within the projection of the electrode plate group 11.

As shown in FIG. 10 to FIG. 15, along the second direction Y, a length of the first termination section 1221 is H₁, the length of the electrode assembly 10 is H, and H₁/H ≥ 0.5.

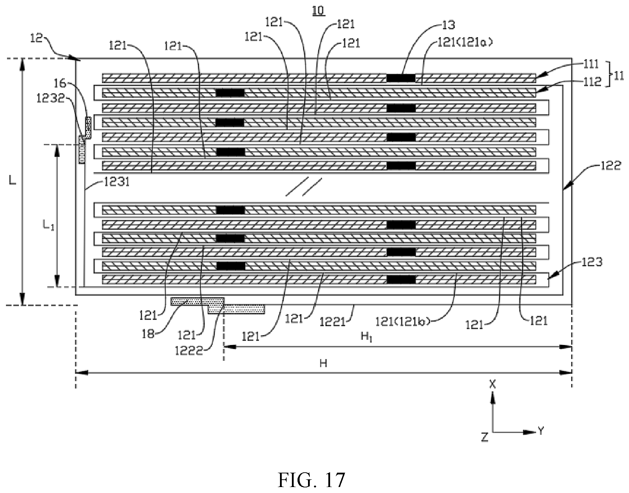

In an embodiment where the first extension section 122 is located at the second extension section 123, the first extension section 122 is bent at least once after covering the second termination section 1231, so that the first termination section 1221 is located on one side in the first direction X. The second termination section 1231 may be fixed to one side surface in the first direction X to improve the stability of the first termination section 1221. For example, as shown in FIG. 16, a second bonding layer 17 is provided between the first termination section 1221 and the side surface in the first direction X of the electrode plate group 11, and the first termination section 1221 is bonded to the side surface in the first direction X. As shown in FIG. 17, the first termination section 1221 is fixed to the side surface in the first direction X of the electrode plate group 11 by a second tape 18, a portion of the second tape 18 is fixed to a surface of the first termination section 1221 facing away from the electrode plate group 11 along the second direction Y, and another portion of the second tape 18 may be fixed to a surface of the electrode plate group 11 or to a surface of another portion of the first extension section 122 other than the first termination section 1221. There may be one or more second tapes 18. In an embodiment where there are a plurality of second tapes 18, the plurality of second tapes 18 may be spaced apart along the width direction of the electrode plate group 11. For example, there may be 1 to 5 second tapes 18.

Along the winding direction of the first extension section 122, the end of the first extension section 122 away from the first separation section 121a is the first termination end 1222, and along the winding direction of the second extension section 123, the end of the second extension section 123 away from the second separation section 121b is the second termination end 1232.

The first termination end 1222 is also a termination end of the first termination section 1221 along the winding direction of the first extension section 122, and the second termination end 1232 is also a termination end of the second termination section 1231 along the winding direction of the second extension section 123.

Along the winding direction of the first extension section 122, a portion of the first extension section 122 extending beyond the second termination end 1232 is bent at least once, so that the first termination section 1221 is located on one side in the first direction X.

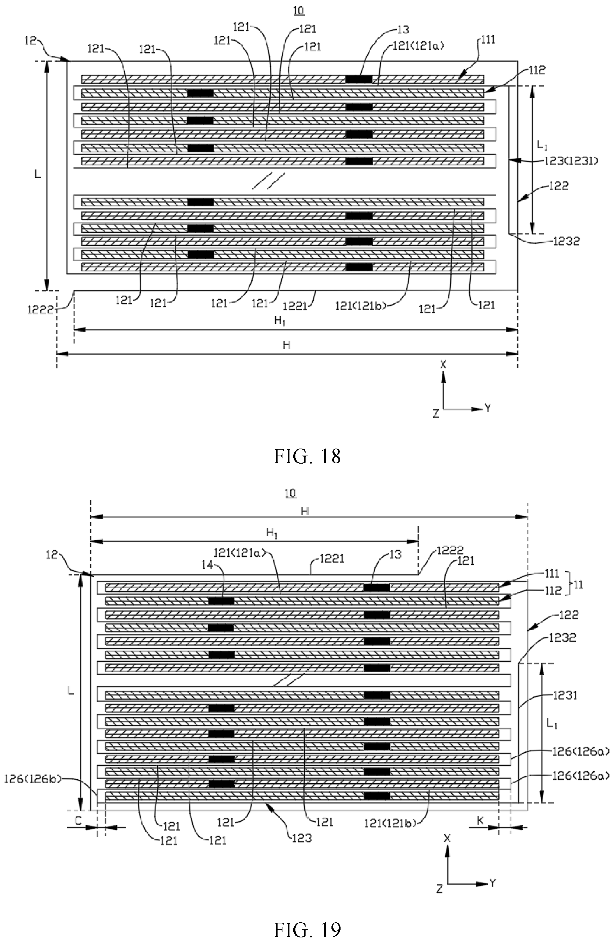

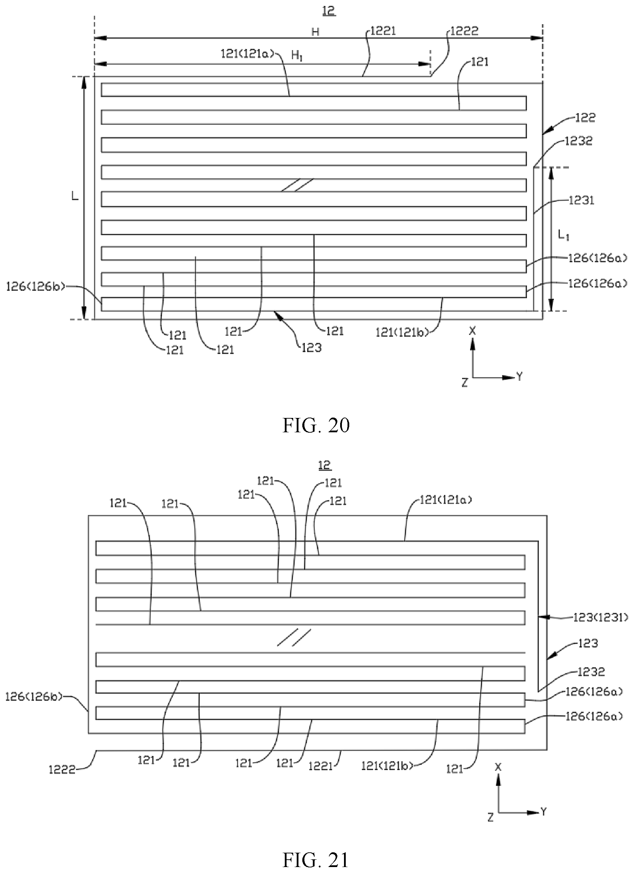

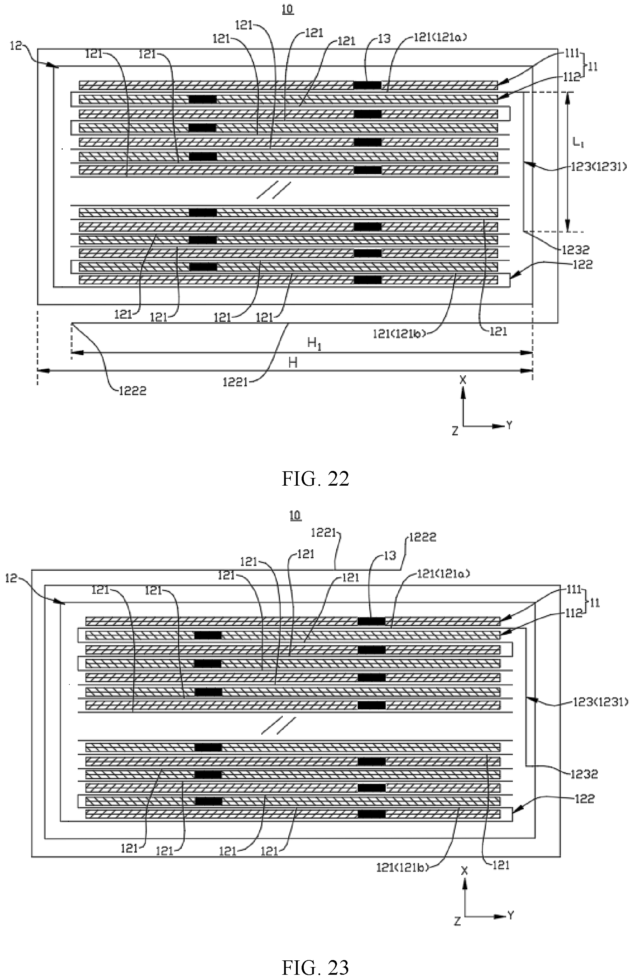

For example, in some embodiments, along the winding direction of the first extension section 122, a portion of the second extension section 123 extending beyond the second termination end 1232 does not exceed two turns, where the two turns herein refer to two turns around the electrode plate group 11. Understandably, the portion of the first extension section 122 extending beyond the second termination end 1232 is bent no more than nine times. This prevents degradation of the cycling performance of the battery cell 100 caused by degraded wettability of the electrode assembly 10 due to excessive winding layers of the first extension section 122 in the circumferential direction of the electrode plate group 11 and also reduces the impact of the first extension section 122 and second extension section 123 on the size of the electrode assembly 10, thereby allowing the battery cell 100 to have high energy density. The portion of the first extension section 122 extending beyond the second termination end 1232 along the winding direction is bent at least once and then located on one side in the first direction X. As shown in FIG. 10, FIG. 12, FIG. 14, FIG. 16, FIG. 17, and FIG. 19, the portion of the first extension section 122 extending beyond the second termination end 1232 is 0.75 turn (3/4 turn); as shown in FIG. 18, the portion of the first extension section 122 extending beyond the second termination end 1232 is 0.25 turn (1/4 turn); as shown in FIG. 21, the portion of the first extension section 122 extending beyond the second termination end 1232 is 0.25 turn (1/4 turn); as shown in FIG. 22, the portion of the first extension section 122 extending beyond the second termination end 1232 is 1.25 turns (5/4 turns); and as shown in FIG. 23, the portion of the first extension section 122 extending beyond the second termination end 1232 is 1.75 turns (7/4 turns).

It should be noted that winding the first extension section 122 one turn along the circumferential direction of the electrode plate group 11 requires four times of bending and forms at least four first extension portions respectively located on four surfaces in the circumferential direction of the electrode plate group 11, and each turn of the first extension section 122 includes at least four first extension portions. In an embodiment where the first separation section 121a and the second separation section 121b are two separation sections 121 farthest apart among the plurality of separation sections 121, winding the first extension section 122 one turn along the circumferential direction of the electrode plate group 11 requires four times of bending and forms four first extension portions respectively located on four surfaces in the circumferential direction of the electrode plate group 11, and each turn of the first extension section 122 includes four first extension portions.

Along the second direction, a length of the first termination section 1221 is H₁, which refers to a dimension of the first termination section 1221 along the second direction Y and may alternatively be understood as a length from a position of the first termination section 1221 corresponding to a corner to the first termination end 1222 of the first termination section 1221. The length H of the electrode assembly 10 refers to a dimension of the electrode assembly 10 along the second direction Y.

For example, H₁/H may be 0.5, 0.6, 0.7, 0.8, 0.9, 1, or the like.

H₁/H ≥ 0.5 allows the second termination section 1231 to have a large coverage area in the second direction Y, which helps to improve the stability of the first termination section 1221 and the safety performance of the battery cell 100.

In some embodiments, 0.5 ≤ H₁/H < 1.

Understandably, the length H₁ of the first termination section 1221 is less than the length H of the electrode assembly 10. For example, H₁/H may be 0.5, 0.55, 0.57, 0.65, 0.75, 0.85, 0.89, 0.9, 0.95, or the like.

0.5 ≤ H₁/H < 1 not only allows the first termination section 1221 to have a large coverage area in the second direction Y to improve the stability of the first termination section 1221 and the safety of the battery cell 100, but also allows the first termination section 1221 to provide good insulation and separation on one side in the first direction X, thereby further improving the safety performance of the battery cell 100. H₁/H < 1 also reserves space for a fixing member that fixes the first termination section 1221, facilitating fixation of the first termination section 1221.

In some embodiments, 0.8 ≤ H₁/H < 1.

For example, H₁/H may be 0.8, 0.83, 0.85, 0.87, 0.92, 0.93, 0.97, or the like.

0.8 ≤ H₁/H < 1 allows the first termination section 1221 to have a large coverage area in the second direction Y of the electrode plate group to improve the stability of the first termination section 1221, and also reserves more space in the second direction Y for a fixing member that fixes the second termination section 1231, thereby further improving the stability of the first termination section 1221.

A drop test, a low-temperature cycling test, and a hotbox test were performed on the battery cell 100.

Drop test: First, a lithium-ion battery cell was fully charged (4.5 V), left standing for 2 hours, then clamped in a specific drop fixture, dropped onto a concrete drop floor from a drop height of 1 m at 25°C along each surface twice; and a total of 12 tests were performed. The pass criterion is: after the test is completed, the battery is considered to pass the test if there is no fire, no explosion, no smoke, no electrolyte leakage, no rupture, and voltage drop less than 1000 mV.

Low-temperature cycling test: The lithium-ion battery cell was subjected to a charge-discharge cycling test in a -10°C constant-temperature chamber within a charge-discharge voltage range of 3.0 V to 4.5 V, charged at a rate of 1.2C to 4.5 V, then charged at a constant voltage of 4.5 V to 0.02C, left standing for 10 min, and then discharged at a rate of 0.5C to 3 V; this charge-discharge process was repeated 500 times; and an initial capacity C1 and a capacity C2 after the 500th cycle were recorded for calculating the capacity retention rate.

Hotbox test: At room temperature, the lithium-ion battery was charged at a constant current rate of 0.5C to a full charge voltage of 4.5 V, and still charged at a constant voltage of 4.5 V to a cutoff current of 0.05C to reach a fully charged state; the appearance was checked to ensure that the lithium-ion battery was in a normal usable state; the fully charged battery was replaced in an oven, heated at a speed of 5°C/min to a specified hotbox test temperature of 135°C, and kept at the temperature for one hour; and the state of the battery was observed during this process. Pass criterion: no fire and no explosion occurs in the battery. Hotbox test pass rate = number of batteries passing hotbox test/total number.

The data in Table 2 below were obtained.

**Table 2**

| | H₁ | H | H₁/H | Drop test | Low-temperature cycling test | Hotbox test |
|---|---|---|---|---|---|---|
| Example 1-3 | 10 cm | 20 cm | 0.5 | 11/12 | 83.50% | 4/5 |
| Example 2-1 | 12 cm | 20 cm | 0.6 | 11/12 | 83.50% | 4/5 |
| Example 2-2 | 14 cm | 20 cm | 0.7 | 12/12 | 83.90% | 4/5 |
| Example 2-3 | 16 cm | 20 cm | 0.8 | 12/12 | 84.50% | 5/5 |
| Example 2-4 | 18 cm | 20 cm | 0.9 | 12/12 | 84.80% | 5/5 |
| Example 2-5 | 20 cm | 20 cm | 1 | 12/12 | 84.20% | 5/5 |
| Example 2-6 | 8 cm | 20 cm | 0.4 | 6/12 | 82.10% | 3/5 |

As shown in Table 2, when the length H of the electrode assembly 10 remains unchanged, when H₁/H is 0.4, the drop test pass rate is 6/12, the low-temperature cycling test pass rate is 82.10%, and the hotbox test pass rate is 3/5, which are all relatively low. When H₁/H is 0.5, 0.6, 0.7, 0.8, 0.9, or 1, the drop test pass rates are 11/12, 11/12, 12/12, 12/12, 12/12, and 12/12, respectively, which are all relatively high, the low-temperature cycling test pass rates are 83.50%, 83.50%, 83.90%, 84.50%, 84.80%, and 84.20%, respectively, which are all relatively high, and the hotbox test pass rates are 4/5, 4/5, 4/5, 5/5, 5/5, and 5/5, respectively, which are all relatively high, indicating that the battery cell 100 has better thermal safety and cycling stability. As compared to a case where L₁/L is 0.5, 0.6, or 0.7, when H₁/H is 0.8, 0.9, or 1, the drop test pass rate, low-temperature cycling test pass rate, and hotbox test pass rate are higher, and the battery cell 100 has better stability.

As shown in FIG. 10 to FIG. 15, in some embodiments, along the first direction, a length of the second termination section 1231 is L₁, a thickness of the electrode assembly 10 is L, and L₁/L ≥ 0.5.

In an embodiment where the first extension section 122 is located on an outer side of the second extension section 123, the first extension section 122 is wound to cover the second extension section 123. Since the first extension section 122 is wound along the circumferential direction of the electrode plate group 11 to cover the second termination section 1231, the second termination section 1231 can be clamped on one side surface of the electrode plate group 11 along the second direction Y by the first extension section 122, so that the second termination section 1231 remains located on one side in the second direction Y. In this way, no connection relationship needs to be provided between the second termination section 1231 and the electrode plate group 11, reducing a forming process of the electrode assembly 10. Certainly, the second termination section 1231 may alternatively be fixed to one side surface in the second direction Y to improve the stability of the second termination section 1231. For example, as shown in FIG. 16, a first bonding layer 15 is provided between the second termination section 1231 and the side surface in the second direction Y, and the second termination section 1231 is bonded to a side surface in the second direction Y. As shown in FIG. 17, the second termination section 1231 is fixed to the side surface in the second direction Y by a first tape 16, a portion of the first tape 16 is fixed to a surface of the second termination section 1231 facing away from the electrode plate group 11 along the second direction Y, and another portion of the first tape 16 may be fixed to a surface of the electrode plate group 11 or to a surface of another portion of the second extension section 123 other than the second termination section 1231. There may be one or more first tapes 16. In an embodiment where there are a plurality of first tapes 16, the plurality of first tapes 16 may be spaced apart along the width direction of the electrode plate group 11. For example, there are 1 to 5 first tapes 16.

In some embodiments, as shown in FIG. 18, the second extension section 123 may be bent relative to the first separation section 121a and then completely located on one side in the second direction Y. Understandably, the second termination section 1231 is the second extension section 123, and the second extension section 123 is wound 1/4 turn along the circumferential direction of the electrode plate group 11.

In some other embodiments, the second termination section 1231 is a portion of the first extension section 122, and the second extension section 123 may be wound more than 1/4 turn along the circumferential direction of the electrode plate group 11, that is, the second extension section 123 may be bent at least once during winding, each bending position of the second extension section 123 corresponds to a corner position in the circumferential direction of the electrode plate group 11, and the bent second extension section 123 may form a plurality of second extension portions, where some of the plurality of second extension portions are distributed on at least one side in the first direction X, and some other of the plurality of second extension portions are distributed on at least one side in the second direction Y. The second termination section 1231 is one of the plurality of first extension portions. For example, as shown in FIG. 10 to FIG. 17, the second extension section 123 is bent three times to form three second extension portions.

It should be noted that four times of bending is required for winding the second extension section 123 one turn along the circumferential direction of the electrode plate group 11, forming at least four second extension portions respectively located on four surfaces in the circumferential direction of the electrode plate group 11. In an embodiment where the first separation section 121a and the second separation section 121b are two separation sections farthest apart among the plurality of separation sections 121, four times of bending is required for winding the second extension section 123 one turn along the circumferential direction of the electrode plate group 11, forming four second extension portions respectively located on four surfaces in the circumferential direction of the electrode plate group 11. Each turn of the second extension section 123 includes four second extension portions.

In some other embodiments, the second extension section 123 may form two non-overlapping second extension portions on a side connected to the second separation section 121b.

The length L₁ of the second termination section 1231 refers to a dimension of the first termination section 1221 along the first direction X, and may alternatively be understood as a length from a position of the second termination section 1231 corresponding to a corner to the second termination end 1232 of the second termination section 1231. The thickness L of the electrode assembly 10 refers to a dimension of the electrode assembly 10 along the first direction X.

For example, L₁/L may be 0.5, 0.6, 0.7, 0.8, 0.9, 1, or the like.

L₁/L ≥ 0.5 allows the second termination section 1231 to have a large coverage area in the first direction X, which helps to improve the stability of the second termination section 1231 and the safety of the battery cell 100.

In some embodiments, 0.5 ≤ L₁/L ≤ 0.9.

Understandably, the length L₁ of the second termination section 1231 is less than the thickness L of the electrode assembly 10. For example, L₁/L may be 0.5, 0.55, 0.57, 0.65, 0.75, 0.85, 0.89, or the like.

0.5 ≤ L₁/L ≤ 0.9 not only allows the second termination section 1231 to have a large coverage area in the first direction X to improve the stability of the second termination section 1231 and the safety of the battery cell 100, but also allows the second termination section 1231 to provide good insulation and separation on one side in the second direction Y, thereby further improving the safety performance of the battery cell 100.

In some embodiments, 0.5 ≤ L₁/L ≤ 0.7.

For example, L₁/L may be 0.5, 0.53, 0.58, 0.63, 0.67, 0.69, or the like.

0.5 ≤ L₁/L ≤ 0.7 not only allows the second termination section 1231 to have a large coverage area in the first direction X to improve the stability of the second termination section 1231 and the safety of the battery cell 100, but also reduces the risk of the second termination section 1231 being squeezed and wrinkled due to winding of the second extension section 123, thereby providing the second termination section 1231 with good flatness and insulation and separation capability.

A drop test, a low-temperature cycling test, and a hotbox test were performed on the battery cell 100.

The data in Table 3 below were obtained.

**Table 3**

| | L₁ | L | L₁/L | Drop test | Low-temperature cycling test | Hotbox test |
|---|---|---|---|---|---|---|
| Example 1-1 | 1.25 cm | 2.5 cm | 0.5 | 12/12 | 84% | 5/5 |
| Example 1-2 | 1.5 cm | 2.5 cm | 0.6 | 12/12 | 84.5% | 5/5 |
| Example 1-3 | 1.75 cm | 2.5 cm | 0.7 | 12/12 | 83.50% | 5/5 |
| Example 1-4 | 2 cm | 2.5 cm | 0.8 | 11/12 | 82.20% | 5/5 |
| Example 1-5 | 2.25 cm | 2.5 cm | 0.9 | 11/12 | 81.90% | 5/5 |
| Example 1-6 | 2.5 cm | 2.5 cm | 1 | 9/12 | 80.50% | 4/5 |
| Example 1-7 | 1.4 cm | 2 cm | 0.7 | 12/12 | 84.10% | 5/5 |
| Example 1-8 | 1 cm | 2.5 cm | 0.4 | 5/12 | 70% | 2/5 |

As shown in Table 3, when the thickness L of the electrode assembly 10 remains unchanged, when L₁/L is 0.4, the drop test pass rate is 5/12, the low-temperature cycling test pass rate is 70%, and the hotbox test pass rate is 2/5, which are all relatively low. When L₁/L is 0.5, 0.6, 0.7, 0.8, 0.9, or 1, the drop test pass rates are 12/12, 12/12, 12/12, 11/12, 11/12, and 9/12, respectively, which are all relatively high, the low-temperature cycling test pass rates are 84%, 84.5%, 83.50%, 82.20%, 81.90%, and 80.50%, respectively, which are all relatively high, and the hotbox test pass rates are 5/5, 5/5, 5/5, 5/5, 5/5, and 4/5. As compared to a case where L₁/L is 1, when L₁/L is 0.5, 0.6, 0.7, 0.8, or 0.9, the drop test pass rate, low-temperature cycling test pass rate, and hotbox test pass rate are higher, and the battery cell 100 has better quality. As compared to a case where L₁/L is 0.8, 0.9, or 1, when L₁/L is 0.5, 0.6, or 0.7, the drop test pass rate, low-temperature cycling test pass rate, and hotbox test pass rate are higher, and the battery cell 100 has better quality.

In some embodiments, along the first direction X, a dimension of the electrode assembly 10 is L, and 5 cm ≤ L ≤ 30 cm. That is, the thickness of the electrode assembly 10 is L, and 5 cm ≤ L ≤ 30 cm. For example, L may be 5 cm, 10 cm, 15 cm, 20 cm, 25 cm, 30 cm, or the like.

5 cm ≤ L ≤ 30 cm makes the battery cell 100 have an appropriate size and be adaptable to more use scenarios.

In some embodiments, 10 cm ≤ L ≤ 25 cm.

For example, L may be 10 cm, 12 cm, 16 cm, 17 cm, 23 cm, 27 cm, 29 cm, or the like.

10 cm ≤ L ≤ 25 cm makes the battery cell 100 have an appropriate size and be adaptable to more use scenarios.

As shown in FIG. 19 and FIG. 20, in some embodiments, the separator 12 is an integrally formed structure. The separator 12 is a continuous structure, and the first extension section 122, the second extension section 123, and the plurality of separation sections 121 are sequentially connected to form an entirety.

The separator 12 being an integrally formed structure facilitates manufacturing of the electrode assembly 10 and reduces the risk of relative movement between the separation section 121, the positive electrode plate 111, and the negative electrode plate 112, helping to improve the safety performance of the battery cell 100.

As shown in FIG. 19, in some embodiments, the separator 12 further includes a plurality of bending sections 126, and each bending section 126 connects two adjacent separation sections 121. Each bending section 126 connects two adjacent separation sections 121, so that the two adjacent separation sections 121 restrain each other through the bending section 126, reducing the risk of displacement of the separation sections 121 and supporting the safety performance of the battery cell 100.

In some embodiments, the plurality of bending sections 126 include a first bending section 126a, the first bending section 126a is located on one side in the second direction Y, the first bending section 126a is disposed facing one end of the negative electrode plate 112, and the first bending section 126a covers one end of the negative electrode plate 112. Along the second direction Y, a distance between the negative electrode plate 112 and the first bending section 126a is K, and 0 mm ≤ K ≤ 0.9 mm.

K refers to a distance along the second direction Y from the end of the negative electrode plate 112 facing the first bending section 126a to the surface of the first bending section 126a facing the negative electrode plate 112. For example, K may be 0 mm, 0.1 mm, 0.2 m, 0.3 m, 0.4 m, 0.5 m, 0.6 m, 0.7 m, 0.8 m, 0.9 mm, or the like.

0 mm ≤ K ≤ 0.9 mm can reduce the risk of wrinkling of the negative electrode plate 112 caused by squeezing the negative electrode plate 112 when the separator 12 is bent.

In some embodiments, as shown in FIG. 19 and FIG. 20, the plurality of bending sections 126 further include a second bending section 126b, and the first bending section 126a and the second bending section 126b are located on two opposite sides in the length direction of the electrode plate group 11, respectively. Along the second direction Y, the second bending section 126b is disposed facing one end of the positive electrode plate 111, and the second bending section 126b faces one end of the positive electrode plate 111.

In some embodiments, along the second direction Y, a distance between the positive electrode plate 111 and the second bending section 126b is C, and 0 mm ≤ C ≤ 0.9 mm.

C refers to a distance along the second direction Y from the end of the positive electrode plate 111 facing the second bending section 126b to the surface of the second bending section 126b facing the positive electrode plate 111. For example, M may be 0 mm, 0.1 mm, 0.2 mm, 0.3 mm, 0.4 mm, 0.5 mm, 0.6 mm, 0.7 mm, 0.8 mm, 0.9 mm, or the like.

0 mm ≤ C ≤ 0.9 mm can reduce the risk of wrinkling of the positive electrode plate 111 caused by squeezing the positive electrode plate 111 when the separator 12 is bent.

As shown in FIG. 18 and FIG. 21, in some other embodiments, the separator 12 includes a first separator 12 and a second separator 12, the first separator 12 includes at least the first separation section 121a and the first extension section 122, and the second separator 12 includes at least the second separation section 121b and the second extension section 123.

The first separator 12 and the second separator 12 are independent of each other, and the first separator 12 and the second separator 12 are arranged separately. The separator 12 is divided into a plurality of short portions, facilitating stacking of the separator 12, the positive electrode plate 111, and the negative electrode plate 112.

The battery cell 100 further includes a housing 20, and the electrode assembly 10 is accommodated in the housing 20. The housing 20 forms an accommodating space. The accommodating space may be used to accommodate the electrode assembly 10, the electrolyte, and the like. The material of the housing 20 includes, but is not limited to, steel, aluminum, copper, or the like. The housing 20 may be a hard housing, such as a steel housing, an aluminum housing, or a hard plastic housing. The housing 20 may alternatively be a soft housing, such as an aluminum-plastic film, thereby forming a pouch battery cell 100.

The battery cell 100 may further include two or more electrode assemblies 10 connected in parallel, and connecting the two or more electrode assemblies 10 in parallel can further increase the energy density of the battery.

An embodiment of this application further provides an electric device, where the electric device includes the battery cell 100 provided in any one of the foregoing embodiments.

The battery cell 100 provided in any one of the foregoing embodiments has good quality and can improve the power use safety and power use stability of the electric device powered by the battery cell 100.

It should be noted that the // structure in the drawings of this application represents that at least one of the separation section 121, the positive electrode plate 111, and the negative electrode plate 112 in the electrode assembly 10 is not shown.

The foregoing descriptions are merely preferred embodiments of this application and are not intended to limit this application. For persons skilled in the art, this application may have various modifications and changes. Any modification, equivalent replacement, improvement, or the like made within the spirit and principle of this application shall fall within the protection scope of this application.

## Claims

1. A battery cell, comprising an electrode assembly, wherein the electrode assembly comprises an electrode plate group and a separator, the electrode plate group comprises a positive electrode plate and a negative electrode plate stacked along a first direction, and the separator is configured to separate the positive electrode plate from the negative electrode plate;
wherein the separator comprises a first termination section and a second termination section, the first termination section is located on one side of the electrode plate along the first direction, the second termination section is located on one side of the electrode plate group along a second direction, and the first direction is perpendicular to the second direction.

2. The battery cell according to claim 1, wherein along the second direction, a length of the first termination section is H₁, a length of the electrode assembly is H, and H₁/H ≥ 0.5.

3. The battery cell according to claim 2, wherein 0.5 ≤ H₁/H < 1.

4. The battery cell according to claim 3, wherein 0.8 ≤ H₁/H < 1.

5. The battery cell according to claim 1, wherein along the first direction , a length of the second termination section is L₁, a thickness of the electrode assembly is L, and L₁/L ≥ 0.5.

6. The battery cell according to claim 5, wherein 0.5 ≤ L₁/L ≤ 0.9.

7. The battery cell according to claim 6, wherein 0.5 ≤ L₁/L ≤ 0.7.

8. The battery cell according to claim 1, satisfying at least one of the following conditions:
condition I: a maximum pore size of the separator is M, and 0.03 µm ≤ M ≤ 1 µm; or
condition II: a minimum pore size of the separator is N, and 0.01 µm ≤ N ≤ 0.03 µm.

9. The battery cell according to claim 8, satisfying at least one of the following conditions: $0.04 μm \leq M \leq 1 μm ;$ or $0.01 μm \leq N \leq 0.02 μm .$

10. The battery cell according to claim 1, wherein the positive electrode plate is bonded to the separator, a bonding strength between the positive electrode plate and the separator is F₁, and 1 N/m ≤ F₁ ≤ 40 N/m.

11. The battery cell according to claim 1, wherein the negative electrode plate is bonded to the separator, a bonding strength between the negative electrode plate and the separator is F₂, and 1 N/m ≤ F₂ ≤ 45 N/m.

12. The battery cell according to claim 1, wherein along the first direction, a thickness of the electrode assembly is L, and 5 cm ≤ L ≤ 30 cm.

13. The battery cell according to claim 12, wherein 10 cm ≤ L ≤ 25 cm.

14. The battery cell according to claim 1, wherein the separator comprises a substrate layer and a ceramic layer, and along a thickness direction of the separator, the ceramic layer is provided on at least one side of the substrate layer.

15. The battery cell according to claim 14, wherein a thickness of the ceramic layer is K₁, and 0.5 µm ≤ K₁ ≤ 8 µm.

16. The battery cell according to claim 1, wherein the separator further comprises a plurality of separation sections and a plurality of bending sections, each of the separation sections is disposed between adjacent positive electrode plate and negative electrode plate, and each bending section connects two adjacent separation sections.

17. The battery cell according to claim 16, wherein the plurality of bending sections comprise a first bending section facing the negative electrode plate; and
along the second direction, a distance between the negative electrode plate and the first bending section is K, and 0 mm ≤ K ≤ 0.9 mm.

18. The battery cell according to claim 1, wherein the separator further comprises a plurality of separation sections, a first extension section, and a second extension section, each separation section is disposed between adjacent positive electrode plate and negative electrode plate, the plurality of separation sections comprise a first separation section and a second separation section, one end of the first extension section is connected to one end of the first separation section along the second direction and is wound along a circumferential direction of the electrode plate group, one end of the second extension section is connected to one end of the second separation section along the second direction and is wound along a circumferential direction of the electrode plate group, the first termination section is at least part of the first extension section, the second termination section is at least part of the second extension section, and the circumferential direction of the electrode plate group is a direction around a third direction; and
the first extension section is located on an outer side of the second extension section.

19. The battery cell according to claim 18, wherein an end of the first extension section away from the first separation section is a first termination end, an end of the second extension section away from the second separation section is a second termination end, and along a winding direction of the first extension section, a distance by which the first extension section extends beyond the second termination end does not exceed two circumferential lengths of the electrode plate group.

20. The battery cell according to claim 18, wherein the first separation section and the second separation section are two separation sections farthest apart among the plurality of separation sections.

21. The battery cell according to claim 18, wherein the separator comprises a first separator and a second separator, the first separator comprises at least the first separation section and the first extension section, and the second separator comprises at least the second separation section and the second extension section.

22. The battery cell according to claim 1, wherein the separator is an integrally formed structure.

23. The battery cell according to claim 1, wherein the battery cell comprises two or more electrode assemblies connected in parallel.

24. An electric device, comprising the battery cell according to any one of claims 1 to 23.
